# EUROPEAN PATENT APPLICATION

(11) **EP 2 447 552 A1**
(43) Date of publication of application: **02.05.2012**
(21) Application number: 10188944.2
(22) Date of filing: 26.10.2010
(51) Int. Cl.: F16B 41/00, B25B 13/10, B25B 23/10

(54) **Retaining device**

(71) Applicant: NEOPOST TECHNOLOGIES, 92220 Bagneux (FR)
(72) Inventor: Dronsfield, David, Buckhurst Hill, Essex IG9 6AW (GB)
(74) Representative: David, Alain

(57) **Abstract**

A screw retaining device (7) comprising: a first portion (9) adapted to grip a screw; and a second portion (12) comprising means for attachment to a surface; wherein the first and second portions are connected together by a flexible member (14).

## Description

The present invention relates to a retaining device and particularly to a device for retaining a screw when assembling or disassembling mechanical components.

Screws are traditionally used to fasten covers to hide and protect the internal components of a machine, and to protect an operator from moving parts or any dangerous components. Often the screws will be hidden from view by a moveable hinged cover for aesthetic or other reasons and this may be fitted with a safety interlock. For safety reasons the screws are usually only capable of removal to access the internal components by an authorised person and to this extent may require a specially adapted tool. The fixing screws are required to be fully disengaged from the cover before the cover can be removed. Hence a problem arises in storing the screws safely while the covers are off the machine. Loose screws can easily be mislaid, can roll out of sight or can be moved or taken by another person. This can be very inconvenient and could lead to screws being omitted when the machine is re-assembled which can be dangerous and is not easily noticed by an operator or an inspector if the outer covers are replaced since the empty screw holes are out of sight in normal use.

There is a need therefore to provide a means for retaining screws in close proximity to a machine and preferably to provide a means of retaining screws without substantive modification or re-design of existing parts.

US 4,354,540 shows a screw retaining device comprising a cradle for positioning screws over desired fixing points to protect a users fingers while a screwdriver drives the screw into a surface. This device does not attach to a chassis but is simply held in place by the user at the appropriate position. Screws can still be mislaid, lost or inserted in the wrong screw holes.

According to one aspect of the present invention there is provided a screw retaining device comprising: a first portion adapted to grip a screw; and a second portion comprising means for attachment to a surface; wherein the first and second portions are connected together by a flexible member.

Preferably the first portion comprises a hole into which a screw to be retained can be inserted. One or more tabs on the inside of the hole engages the screw to hold it in the hole. The hole is preferably sized appropriately for the screw, i.e. a little larger than the screw so that it can be inserted easily, but not so large that the tabs do not engage with the screw.

In one embodiment the second portion may be adhesive to fix to a machine chassis or frame, or to a machine cover. The adhesive may be provided with a removable protective coating such as a peelable sheet. In another embodiment the second portion comprises a hole for receiving a bolt, rivet or screw, to attach the device to a machine chassis.

The flexible member is preferably formed of a pliable material such as a plastics material, advantageously formed as a thin strip. The device may be moulded in one piece from thin sheet plastics material.

A device according to the invention can be manufactured relatively cheaply in a variety of forms and sizes, and from a variety of materials, according to the intended application.

The inventive device provides a cost effective, versatile means of automatically retaining screws when machines are disassembled, in close proximity to their fixing positions, any number of times without special action being needed even when the screw is removed and reinserted into the machine multiple times. The device requires little or no modification to existing design of machinery.

For a better understanding of the present invention, and to show how the same may be carried into effect, reference will now be made to the accompanying drawings, in which:
Figure 1 is a schematic cross-section through a known machine illustrating a typical use for the device of the invention;
Figures 2, 3, 4 and 5 are schematic views of various embodiments of devices according to the invention in plan view (A) and upper view (B).
Figures 6 to 9 are enlarged cross-sectional views illustrating further details of the invention.

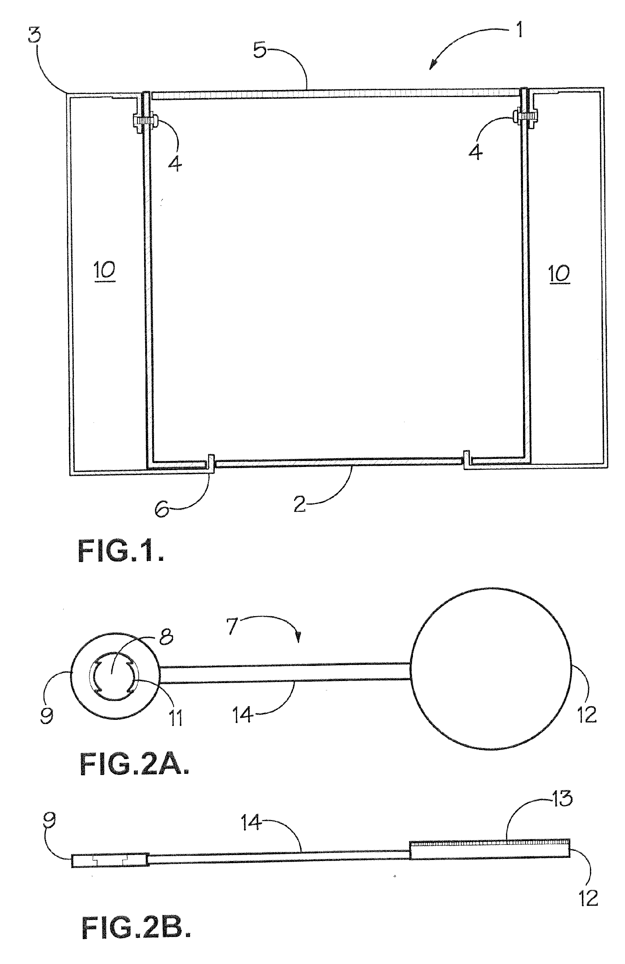

Figure 1 shows a traditional electro-mechanical machine 1 in which mechanical and electrical components 10 are built into and onto a chassis 2. The components are protected by fixed covers 3 which are attached by screws 4 and by a moveable hinged cover 5 with a safety interlock (not shown).

Generally for aesthetic reasons the fixing screws 4 are covered by the removable cover 5 and are only accessible when the removable cover 5 is removed. In this example the fixed covers have tabs 6 which locate in slots in the machine chassis 2. The fixed covers 3 are removed by unscrewing the screws 4 so they are completely disengaged, and then lowering the fixed covers 3 to disengage the location tabs 6 from the slots in the lower part of the machine chassis. It will be seen that the screws 4 can easily be mislaid or lost or acquired by another person while they are disengaged from the fixed covers 3.

Figures 2 to 4 show different embodiments of a plastics moulded screw retaining device 7 with two end portions 9, 12 joined by a flexible section 14. A hole 8 is provided in a first portion 9 at one end, for retaining the screw, and the hole 8 is sized to suit the diameter of the threaded portion of the screw. Small internal tabs 11 engage the screw threads or otherwise grip the screw to prevent it slipping out of the hole 8. At the other end of the device is a second portion 12 comprising means for attaching the device 7 to the machine chassis 2 or frame or some other fixed part of the machine. The first portion 9 and the second portion 12 are joined by a flexible strip 14.

In Figure 2 attachment of the second portion 12 is provided by an adhesive pad 13. Initially this will have a protective coat such as a peelable paper cover which can be peeled away just before the device 7 is attached to the chassis 2 near the fixing screw 4.

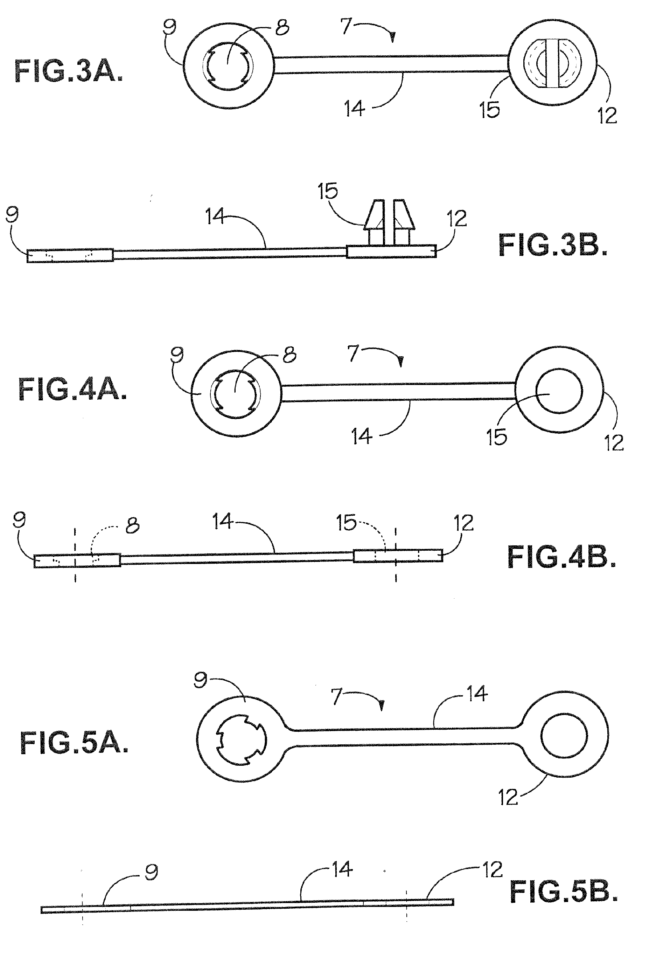

In Figure 3 the attachment is provided by a barb 15 which fits into a hole in the chassis 2 provided, or made, next to the fixing screw hole. In the embodiment of Figure 4 a hole is also required in the chassis 2 and is used in combination with a rivet, screw and nut or bolt and nut, passing through hole 15 in the second portion 12 to secure the device 7 to the chassis 2.

The plastics material of the device 7 may comprise any one of a variety of grades, such as electrically conductive or heat resistant, to suit various applications. Alternatively the device could be produced by die-cutting or other profiling of suitable material and an example is shown in Figure 5. For example thin spring steel would be advantageous if a good electrical earth contact was required between the cover 3, the fixing screw 4 and the chassis 2.

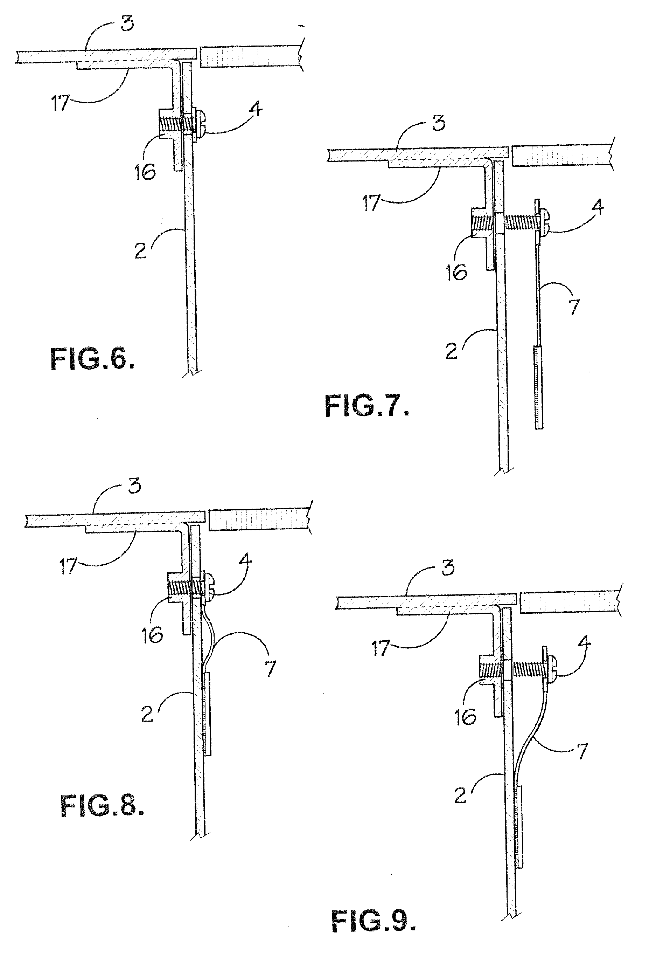

In Figure 6 a fixed cover 3 is shown fitted with an unretained screw 4. The screw 4 fits through a hole in the side of the machine chassis 2 and into an internally threaded orifice 16 in a bracket 17 fixed to the cover 3.

In Figure 7 the screw 4 is shown fitted into a screw retaining device 7 according to the invention, which is in a position ready to be assembled to the chassis.

In Figure 8 the cover fixing screw 4 is in place in the orifice 16 and the screw retaining device 7 is attached to the chassis 2.

In Figure 9 the cover screw 4 is unscrewed from the chassis 2 but is retained, attached to the chassis 2 by the retaining device 7 of the invention.

## Claims

1. A screw retaining device (7) comprising:
a first portion (9) adapted to grip a screw (4); and
a second portion (12) comprising means for attachment to a surface;
wherein the first and second portions are connected together by a flexible member (14).

2. A screw retaining device (7) according to claim 1, wherein the first portion (9) comprises a hole (8) into which a screw (4) to be retained can be inserted, and at least one tab projecting from the side of the hole (8) radially inwardly of the hole (8).

3. A screw retaining device (7) according to claim 2 wherein the hole (8) is sized to fit the screw (4).

4. A screw retaining device (7) according to claim 2 comprising a plurality of tabs projecting from the side of the hole (8) radially inwardly of the hole (8).

5. A screw retaining device (7) according to any one of claims 1 to 4, wherein the second portion (12) comprises an adhesive member with a removable protective coating.

6. A screw retaining device (7) according to claim 1, 2, 3 or 4, wherein the second portion (12) comprises a barb for inserting in a hole or indentation in the surface of the article.

7. A screw retaining device (7) according to any one of claims 1 to 4, wherein the second portion (12) comprises a hole for receiving a rivet, bolt or screw.

8. A screw retaining device (7) according to any one of the preceding claims, wherein the device is formed of a plastics material.

9. A screw retaining device (7) according to any one of the preceding claims, wherein the device is formed of thin sheet material.

10. A screw retaining device (7) according to any one of the preceding claims, wherein the device is formed by moulding.

11. A screw retaining device (7) according to any one of the preceding claims in combination with a screw.

12. A screw retaining device (7) according to any one of the preceding claims when attached to a chassis of an electro-mechanical apparatus.
